# FASCICULE DE BREVET EUROPEEN

(11) **EP 3 453 558 B1**
(45) Date de publication et mention de la délivrance du brevet: **26.05.2021**
(21) Numéro de dépôt: 18193214.6
(22) Date de dépôt: 07.09.2018
(51) Int. Cl.: B60L 9/12, B60L 1/00, B60L 1/02, B60L 1/14, B60L 9/28, B60L 15/00, B60L 50/12, B60L 50/13

(54) **MODULE D'ALIMENTATION EN PUISSANCE ÉLECTRIQUE D'UN BLOC MOTEUR, PROCÉDÉ D'ALIMENTATION, SYSTÈME DE TRACTION ET VÉHICULE ASSOCIÉS**
EINSPEISUNGSMODUL ELEKTRISCHER LEISTUNG EINES MOTORBLOCKS, ENTSPRECHENDES EINSPEISUNGSVERFAHREN, ZUGSYSTEM UND FAHRZEUG
POWER SUPPLY MODULE OF AN ENGINE BLOCK AND ASSOCIATED SUPPLY METHOD, TRACTION SYSTEM AND VEHICLE

(30) Priorité: 07.09.2017 FR 1758258
(43) Date de publication de la demande: 13.03.2019
(73) Titulaire: ALSTOM Transport Technologies, 93400 Saint-Ouen (FR)
(72) Inventeur: THEUX, Julien, 65600 Semeac (FR); BRUGUIER, Cyrille, 65320 Borderes-sur-Echez (FR); MICKIEWICZ, Vincent, 65420 Ibos (FR); DURRIS, Cyril, 65690 Montignac (FR)
(74) Mandataire: Lavoix

(56) Documents cités:
- DE-A1-102014 000 514
- FR-A1- 3 024 612
- FR-A1- 3 044 180
- JP-A- S5 783 102
- US-A1- 2003 025 399
- US-A1- 2013 313 059

## Description

La présente invention concerne un module d'alimentation en puissance électrique d'un bloc moteur d'un véhicule électrique de transport. Elle concerne également un procédé d'alimentation en puissance électrique d'un bloc moteur, un système de traction d'un véhicule électrique de transport et un véhicule électrique de transport associé.

L'invention se situe dans le domaine de la traction de véhicule électrique et notamment de véhicules ferroviaires.

Dans les dernières années ont été développés des véhicules électriques de transport adaptés à être alimentés par plusieurs sources d'alimentation, afin de fonctionner à la fois avec une alimentation électrique fournie par une voie électrifiée et avec une alimentation électrique autonome.

Il existe des systèmes d'alimentation dits bi-mode, permettant d'alimenter un bloc moteur selon un premier mode d'alimentation électrique, par exemple par connexion à une caténaire, ou, sur commande, selon un deuxième mode d'alimentation électrique, par exemple en utilisant la puissance fournie par une source d'énergie autonome comme un moteur diesel.

Un des problèmes rencontrés dans ce type de système d'alimentation à partir de plusieurs sources d'énergie électrique est la transition entre un premier mode d'alimentation et un deuxième mode d'alimentation. En effet pendant une durée de transition donnée, le niveau de puissance électrique fournie est, dans certains cas, quasiment égal à zéro, et des arrêts complets de fourniture de puissance électrique surviennent. En particulier, la transition entre une alimentation électrique par caténaire vers une alimentation électrique par une source autonome pose problème, du fait d'une latence de montée en puissance de la source autonome.

Les documents DE 10 2014 000514 A1, JP S57 83102 A, US 2013/313059 A1 et US 2003/025399 A1 décrivent des systèmes d'alimentation à partir de plusieurs sources d'énergie électrique.

L'invention a pour objectif de résoudre ce problème en permettant de maintenir la puissance électrique fournie au bloc moteur sensiblement constante pendant la transition entre deux modes d'alimentation.

A cet effet, l'invention a pour objet un module d'alimentation en puissance électrique d'un bloc moteur d'un véhicule électrique de transport, comprenant un premier bloc d'alimentation dudit bloc moteur, comprenant un premier convertisseur branché à une première source d'alimentation électrique, adapté à alimenter ledit bloc moteur selon un premier mode d'alimentation électrique, ledit premier convertisseur fournissant une première puissance électrique, et un deuxième bloc d'alimentation comprenant un deuxième convertisseur branché à une deuxième source d'alimentation électrique, adapté à alimenter ledit bloc moteur selon un deuxième mode d'alimentation électrique.

Le premier convertisseur et le deuxième convertisseur sont branchés en parallèle, le premier et deuxième convertisseur ayant une même tension de sortie.

Le module d'alimentation comporte un module de contrôle adapté à :
- recevoir une commande de basculement entre un mode d'alimentation initial parmi ledit premier mode et ledit deuxième mode, et un mode d'alimentation final différent du mode d'alimentation initial,
commander ledit premier convertisseur pour faire varier progressivement la tension de sortie, pour réaliser une transition entre le mode d'alimentation initial et le mode d'alimentation final, et contrôler la première puissance fournie par ledit premier convertisseur pour maintenir une puissance électrique d'alimentation fournie au bloc moteur non nulle durant la transition, la variation progressive de tension étant appliquée en fonction d'informations préalablement mémorisées comportant une association entre une valeur de deuxième puissance fournie par le deuxième bloc d'alimentation et une valeur de tension en sortie du deuxième convertisseur.

Avantageusement, le module d'alimentation proposé permet, grâce à l'utilisation du module de contrôle, de maintenir une puissance électrique fournie au bloc moteur.

Le module d'alimentation selon l'invention peut présenter une ou plusieurs des caractéristiques ci-dessous, prises indépendamment ou dans toutes leurs combinaisons techniquement acceptables.

Le premier bloc d'alimentation comporte un transformateur connecté à une caténaire, et le deuxième bloc d'alimentation comporte un moteur autonome connecté à un alternateur.

Lorsque le mode d'alimentation initial est le premier mode d'alimentation et le mode d'alimentation final est le deuxième mode d'alimentation, le module de contrôle est adapté à faire baisser progressivement ladite tension de sortie entre une valeur de tension maximale et une valeur minimale, et lorsque le mode d'alimentation initial est le deuxième mode d'alimentation et le mode d'alimentation final est le premier mode d'alimentation, le module de contrôle est adapté à faire augmenter progressivement ladite tension entre une valeur minimale et une valeur de tension maximale.

La variation progressive de tension est une variation linéaire.

Le module de contrôle est adapté à déterminer une deuxième puissance fournie par le deuxième bloc d'alimentation en fonction de ladite tension en sortie du premier convertisseur, et à contrôler ledit premier convertisseur pour fournir un complément de puissance par rapport à ladite deuxième puissance pour maintenir une puissance électrique d'alimentation de valeur donnée.

Le premier convertisseur est un convertisseur actif à quatre quadrants comportant des transistors de type IGBT.

La puissance électrique d'alimentation fournie au bloc moteur est sensiblement constante durant la transition.

Selon un autre aspect, l'invention a pour objet un procédé d'alimentation en puissance électrique d'un bloc moteur de véhicule électrique de transport conforme à la revendication 8.

Selon un mode de réalisation, la puissance électrique d'alimentation fournie au bloc moteur est sensiblement constante durant la transition.

L'invention a également pour objet un système de traction pour un véhicule électrique de transport, comportant un bloc moteur branché à un module d'alimentation tel que défini ci-dessus.

Enfin, l'invention concerne également un véhicule électrique de transport comprenant un système de traction tel que brièvement défini ci-dessus.

D'autres caractéristiques et avantages de l'invention ressortiront de la description qui en est donnée ci-dessous, à titre indicatif et nullement limitatif, en référence aux figures annexées, parmi lesquelles :
- la figure 1 illustre schématiquement un système de traction de véhicule électrique de transport selon un mode de réalisation ;
- la figure 2 est un exemple de chronogramme de fonctionnement illustrant la puissance fournie au bloc moteur en fonction du temps.

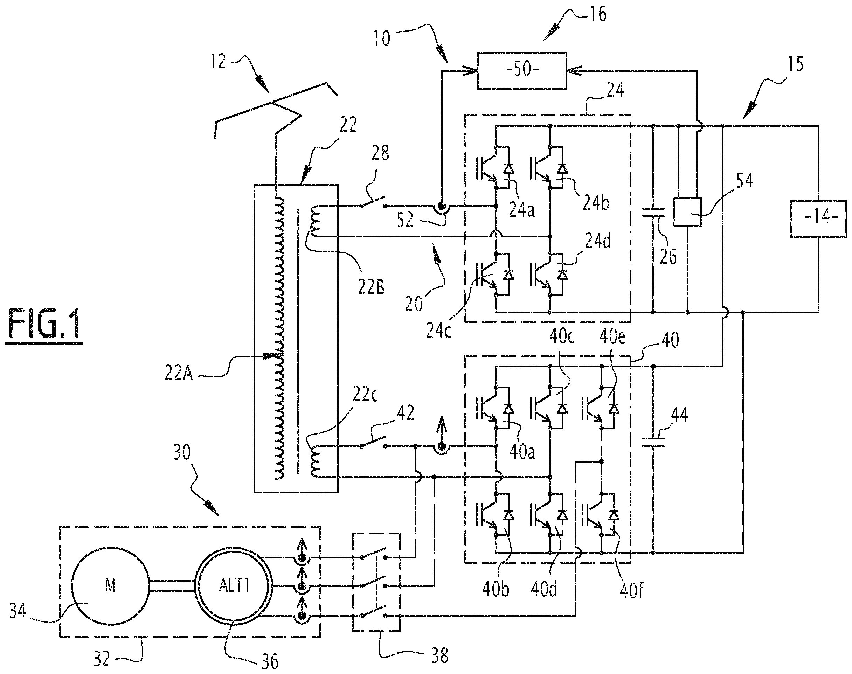

La figure 1 illustre schématiquement un système de traction 10 d'un véhicule électrique, notamment d'un véhicule ferroviaire qui n'est pas représenté.

Le système de traction 10 est adapté à être connecté à une caténaire 12 et comprend un bloc moteur 14. La caténaire 12 est une première source d'alimentation électrique pour le véhicule ferroviaire, et délivre par exemple un courant alternatif monophasé.

Le bloc moteur 14 comprend par exemple un ou des onduleurs et un ou des moteurs électriques non représentés, l'onduleur étant branché entre les blocs d'alimentation décrits ci-après et le moteur électrique, et étant adapté à transformer la puissance électrique continue en puissance électrique triphasée. Le bloc moteur peut également comprendre un convertisseur supplémentaire destiné à alimenter des charges auxiliaires (groupe de refroidissement, éclairage, chargeur batterie, compresseur).

Les éléments du bloc moteur 14 peuvent être situés physiquement à l'intérieur d'un coffre, ou bien ils peuvent être séparés et connectés entre eux par des branchements électriques.

Le système de traction 10 comprend un module d'alimentation électrique 16 propre à fournir une puissance électrique au bloc moteur 14 sur un bus de transmission de tension continue 15.

Le module d'alimentation électrique 16 comprend un premier bloc d'alimentation 20.

Le premier bloc d'alimentation 20 comporte un transformateur 22, dont un circuit primaire 22A est connecté à la caténaire 12. Un premier circuit secondaire 22B du transformateur 22, faisant partie du premier bloc d'alimentation 20, est connecté à un premier convertisseur 24, qui est un convertisseur de puissance électrique alternative vers une puissance continue, ou convertisseur AC/DC.

Le premier convertisseur 24 est un convertisseur quatre quadrants comprenant sur chacune de ses branches un ensemble transistor-diode 24a, 24b, 24c, 24d, de préférence un transistor IGBT (de l'anglais *Insulated-Gate Bipolar Transistor).*

Le premier bloc d'alimentation 20 comporte en outre un condensateur de stockage 26.

Un interrupteur 28 est branché entre le premier circuit secondaire 22B du transformateur 22 et le premier convertisseur 24.

Lorsque le premier bloc d'alimentation 20 est connecté pour alimenter en puissance électrique le bloc moteur 14, le module d'alimentation 16 fonctionne selon un premier mode d'alimentation électrique.

Le module d'alimentation électrique 16 comprend également un deuxième bloc d'alimentation 30.

Le deuxième bloc d'alimentation 30 comporte une deuxième source d'alimentation électrique 32, qui est une source autonome.

Dans le mode de réalisation illustré à la figure 1, la deuxième source d'alimentation 32 comporte un moteur diesel 34 branché à un alternateur 36, et délivrant un courant alternatif triphasé.

La deuxième source d'alimentation est branchée en sortie à un deuxième convertisseur 40, éventuellement à travers un bloc d'interrupteurs 38.

Dans le mode de réalisation illustré, le deuxième convertisseur 40 est également connecté à un deuxième circuit secondaire 22C du transformateur 22, via un interrupteur 42.

Le deuxième convertisseur 40 est formé, dans le mode de réalisation de la figure 1, par un ensemble de commutateurs 40a à 40f, réalisés par des transistors de type IGBT, montés selon une architecture de pont triphasé.

En variantes, le deuxième convertisseur est formé par un pont de diodes triphasé. Dans une variante, le pont de diodes triphasé n'est pas branché au transformateur 22.

Le deuxième bloc d'alimentation 30 comporte en outre un condensateur de stockage 44.

La sortie du deuxième convertisseur 40 est branchée en parallèle à la sortie du premier convertisseur 24, sur le bus de transmission de tension continue 15. Ainsi le premier convertisseur 24 et deuxième convertisseur 40 ont une même tension de sortie.

Lorsque le deuxième bloc d'alimentation 30 est connecté pour alimenter en puissance électrique le bloc moteur 14, le module d'alimentation fonctionne selon un deuxième mode d'alimentation électrique.

En fonctionnement nominal, le bloc moteur 14 du véhicule électrique est alimenté soit selon le premier mode d'alimentation électrique, soit selon le deuxième mode d'alimentation électrique.

Sur commande du conducteur du véhicule électrique, il est possible de changer de mode d'alimentation électrique.

Le module d'alimentation bascule alors du mode d'alimentation électrique en cours, appelé également mode d'alimentation initial, à un mode d'alimentation final, durant une phase de transition.

Le mode d'alimentation initial est l'un des modes d'alimentation électrique parmi le premier mode d'alimentation électrique et le deuxième mode d'alimentation électrique.

Le mode d'alimentation final est l'autre mode d'alimentation électrique parmi le premier mode d'alimentation électrique et le deuxième mode d'alimentation électrique.

Ainsi, en pratique, durant la phase de transition il est possible de passer de l'alimentation électrique par la première source d'alimentation vers la deuxième source d'alimentation, et vice-versa.

Durant la phase de transition, les deux modes d'alimentation électrique sont actifs en même temps, ou, en d'autres termes, le premier bloc d'alimentation 20 et le deuxième bloc d'alimentation 30 fournissent respectivement une première puissance électrique et une deuxième puissance électrique, la somme de la première puissance électrique et de la deuxième puissance électrique étant égale à la puissance électrique fournie au bloc moteur 14.

La fourniture de puissance électrique durant la phase de transition est avantageusement contrôlée par un module de contrôle 50 qui commande le premier convertisseur 24. Le module de contrôle 50 est par exemple un calculateur électronique ou une carte électronique programmable.

Le module de contrôle 50 reçoit en entrée des informations de courant d'un premier capteur de courant 52, branché en entrée du premier convertisseur 24, et de tension d'une unité de mesure 54 adaptée à mesurer la tension continue fournie en sortie des premier et deuxième blocs d'alimentation.

Le module de contrôle 50 est adapté à recevoir une commande de basculement entre un mode d'alimentation initial parmi ledit premier mode et ledit deuxième mode, et un mode d'alimentation final différent du mode d'alimentation initial.

Une telle commande de basculement est par exemple transmise, de manière connue, par un signal approprié suite à une action du conducteur du véhicule, ou plus généralement d'un système de supervision du véhicule dans le cas d'un véhicule sans conducteur à bord.

Le module de contrôle est adapté à mettre en oeuvre la phase de transition en faisant varier progressivement la tension V en sortie du premier convertisseur 24.

La tension de sortie du deuxième convertisseur 40 est égale à la tension de sortie du premier convertisseur 24, les deux sorties étant liées par le bus de transmission 15.

La variation de tension V est une variation décroissante entre une valeur de tension maximale Vₘₐₓ et une valeur minimale Vₘᵢₙ, strictement inférieure à Vₘₐₓ, lorsqu'il s'agit de basculer du premier mode d'alimentation par le premier bloc d'alimentation 20 vers le deuxième mode d'alimentation par le deuxième bloc d'alimentation 30.

Dans un exemple de réalisation, la valeur de tension maximale Vₘₐₓ est comprise entre 1600V et 1800V, et la valeur de tension minimale Vₘᵢₙ est comprise entre 1000V et 1400V.

Dans un autre exemple de réalisation, la valeur de tension maximale Vₘₐₓ est égale à 3600V, et la valeur de tension minimale Vₘᵢₙ est égale à 3000V.

La variation de tension V est une variation croissante entre une valeur minimale Vₘᵢₙ et une valeur de tension maximale Vₘₐₓ lorsqu'il s'agit de basculer du deuxième mode d'alimentation par le deuxième bloc d'alimentation 30 vers le premier mode d'alimentation par le premier bloc d'alimentation 20.

La variation de la tension V en sortie du deuxième bloc d'alimentation 30 entraîne une modification de la puissance électrique fournie par le deuxième bloc d'alimentation 30.

En effet, le deuxième bloc d'alimentation 30 forme un générateur de puissance électrique passif, la tension de sortie étant liée à la deuxième puissance électrique fournie par une relation prédéterminée.

Dans le mode de réalisation préféré dans lequel la deuxième source d'alimentation électrique est un moteur diesel branché à un alternateur, la tension de sortie du deuxième bloc d'alimentation 30 varie selon une droite décroissante en fonction de la deuxième puissance fournie par le deuxième bloc d'alimentation.

Par exemple, le module de contrôle 50 mémorise les valeurs Vₘᵢₙ et Vₘₐₓ et la durée de la transition.

Dans une variante, le module de contrôle 50 mémorise des informations relatives à la relation entre la tension de sortie du deuxième bloc d'alimentation et la deuxième puissance fournie.

Le module de contrôle 50 est adapté à faire varier linéairement la tension de sortie du premier convertisseur.

En variante, une variation progressive monotone, qui n'est pas nécessairement linéaire, est appliquée.

Le module de contrôle 50 est adapté, suite à la réception de la commande de basculement de mode d'alimentation, à contrôler la puissance de sortie du deuxième convertisseur pour la faire varier progressivement, à la hausse ou à la baisse selon le basculement commandé, via le contrôle de la tension de sortie de ce deuxième convertisseur, égale à la tension de sortie du premier convertisseur. Le module de contrôle 50 est également adapté à définir le complément de puissance à fournir par le premier bloc d'alimentation pour réaliser une puissance électrique d'alimentation totale fournie au bloc moteur 14 sensiblement constante durant toute la phase de transition.

En effet, le premier convertisseur 24 du premier bloc d'alimentation 20 est un convertisseur actif, et il est possible de réguler sa tension de sortie indépendamment de la puissance consommée.

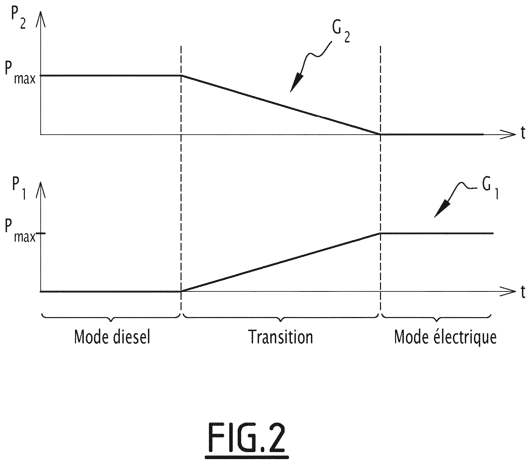

Avantageusement, grâce à ce module d'alimentation, la puissance totale fournie au bloc moteur est sensiblement constante durant la phase de transition, comme illustré schématiquement à la figure 2.

Sur cette figure on a illustré schématiquement un premier chronogramme G₁ représentant la première puissance P₁ fournie par la première source au cours du temps, et un deuxième chronogramme G₂ représentant la deuxième puissance P2 fournie par la deuxième source au cours du temps. Les unités de puissance et de temps respectives ne sont pas indiquées car il s'agit de représentations schématiques.

Dans une première phase nominale correspondant au mode diesel dans cet exemple, la puissance électrique d'alimentation Pₘₐₓ est fournie par la deuxième source.

Durant la phase de transition « Transition », la première puissance P₁ augmente linéairement, tandis que la deuxième puissance P2 diminue linéairement la somme des deux puissances étant maintenue sensiblement égale à Pₘₐₓ.

Durant une deuxième phase nominale correspondant au mode d'alimentation par la caténaire, la puissance électrique d'alimentation Pₘₐₓ est fournie par la première source, selon le premier mode d'alimentation.

Il est à noter que l'exemple de la figure 2 illustre une transition entre le mode diesel et le mode d'alimentation électrique, mais qu'une transition analogue est effectuée entre le mode d'alimentation diesel et le mode d'alimentation électrique.

L'invention a été décrite ci-dessus dans un mode de réalisation préféré dans lequel la puissance électrique fournie au bloc moteur est maintenue sensiblement constante durant la phase de transition.

Selon une variante, la puissance électrique fournie au bloc moteur est sensiblement constante mais inférieure à la puissance électrique fournie par la première ou par la deuxième source d'alimentation.

Selon une autre variante, une puissance électrique variable, non nulle, peut être fournie au bloc moteur 14 durant la transition. La puissance électrique fournie est non nulle et de préférence supérieure à une valeur de seuil minimal de puissance de l'ordre de quelques dizaines de kWatts, par exemple comprise entre 10 et 100 kWatt. Par exemple, le seuil minimal de puissance est égal à 50 kWatts.
nulle et de préférence supérieure à une valeur de seuil minimal de puissance de l'ordre de quelques dizaines de kWatts, par exemple comprise entre 10 et 100 kWatt. Par exemple, le seuil minimal de puissance est égal à 50 kWatts.

## Revendications

1. Module (16) d'alimentation en puissance électrique d'un bloc moteur (14) d'un véhicule électrique de transport, comprenant un premier bloc d'alimentation (20) dudit bloc moteur (14), comprenant un premier convertisseur (24) branché à une première source (12) d'alimentation électrique, adapté à alimenter ledit bloc moteur (14) selon un premier mode d'alimentation électrique, ledit premier convertisseur fournissant une première puissance électrique,
et un deuxième bloc d'alimentation (30) comprenant un deuxième convertisseur (40) branché à une deuxième source (32) d'alimentation électrique, adapté à alimenter ledit bloc moteur (14) selon un deuxième mode d'alimentation électrique, où le premier convertisseur (24) et le deuxième convertisseur (40) sont branchés en parallèle, le premier et deuxième convertisseur ayant une même tension de sortie, le module d'alimentation comportant en outre un module de contrôle (50) adapté à recevoir une commande de basculement entre un mode d'alimentation initial parmi ledit premier mode et ledit deuxième mode, et un mode d'alimentation final différent du mode d'alimentation initial, le module d'alimentation étant **caractérisé en ce qu'**il est configuré pour commander ledit premier convertisseur pour faire varier progressivement la tension de sortie, pour réaliser une transition entre le mode d'alimentation initial et le mode d'alimentation final, et contrôler la première puissance fournie par ledit premier convertisseur pour maintenir une puissance électrique d'alimentation fournie au bloc moteur non nulle durant la transition, ladite variation progressive de tension étant appliquée en fonction d'informations préalablement mémorisées comportant une association entre une valeur de deuxième puissance fournie par le deuxième bloc d'alimentation (30) et une valeur de tension en sortie du deuxième convertisseur.

2. Module selon la revendication 1, dans lequel le premier bloc d'alimentation (20) comporte un transformateur (22) connecté à une caténaire (12), et le deuxième bloc d'alimentation (30) comporte un moteur autonome (34) connecté à un alternateur (36).

3. Module selon l'une des revendications 1 ou 2, dans lequel, lorsque le mode d'alimentation initial est le premier mode d'alimentation et le mode d'alimentation final est le deuxième mode d'alimentation, le module de contrôle (50) est adapté à faire baisser progressivement ladite tension de sortie entre une valeur de tension maximale et une valeur minimale, et lorsque le mode d'alimentation initial est le deuxième mode d'alimentation et le mode d'alimentation final est le premier mode d'alimentation, le module de contrôle (50) est adapté à faire augmenter progressivement ladite tension entre une valeur minimale et une valeur de tension maximale.

4. Module selon l'une quelconque des revendications 1 à 3, dans lequel ladite variation progressive de tension est une variation linéaire.

5. Module selon l'une des revendications 1 à 4, dans lequel le module de contrôle (50) est adapté à déterminer une deuxième puissance fournie par le deuxième bloc d'alimentation (30) en fonction de ladite tension en sortie du premier convertisseur (24), et à contrôler ledit premier convertisseur (24) pour fournir un complément de puissance par rapport à ladite deuxième puissance pour maintenir une puissance électrique d'alimentation de valeur donnée.

6. Module selon l'une quelconque des revendications 1 à 5, dans lequel ledit premier convertisseur (24) est un convertisseur actif à quatre quadrants comportant des transistors (24a, 24b, 24c, 24d) de type IGBT.

7. Module selon les revendications 1 à 6, dans lequel la puissance électrique d'alimentation fournie au bloc moteur est sensiblement constante durant la transition.

8. Procédé d'alimentation en puissance électrique d'un bloc moteur d'un véhicule électrique de transport, mis en oeuvre dans un module d'alimentation (16) en puissance électrique d'un bloc moteur (14) d'un véhicule électrique de transport, comprenant un premier bloc d'alimentation (20) dudit bloc moteur (14), comprenant un premier convertisseur (24) branché à une première source (12) d'alimentation électrique, adapté à alimenter ledit bloc moteur (14) selon un premier mode d'alimentation électrique, ledit premier convertisseur fournissant une première puissance électrique,
et un deuxième bloc d'alimentation (30) comprenant un deuxième convertisseur (40) branché à une deuxième source (32) d'alimentation électrique, adapté à alimenter ledit bloc moteur (14) selon un deuxième mode d'alimentation électrique, dans lequel le premier convertisseur (24) et le deuxième convertisseur (40) sont branchés en parallèle, le premier et deuxième convertisseur ayant une même tension de sortie,
le procédé étant **caractérisé en ce qu'**il est mis en oeuvre par un module de contrôle dudit module d'alimentation et comporte des étapes consistant à :
recevoir une commande de basculement entre un mode d'alimentation initial parmi ledit premier mode et ledit deuxième mode, et un mode d'alimentation final différent du mode d'alimentation initial,
- commander ledit premier convertisseur pour faire varier progressivement ladite tension de sortie, pour réaliser une transition entre le mode d'alimentation initial et le mode d'alimentation final, et contrôler la première puissance fournie par ledit premier convertisseur (24) pour maintenir la puissance électrique d'alimentation fournie au bloc moteur étant non nulle durant la transition, ladite variation progressive de tension étant appliquée en fonction d'informations préalablement mémorisées comportant une association entre une valeur de deuxième puissance fournie par le deuxième bloc d'alimentation (30) et une valeur de tension en sortie du deuxième convertisseur.

9. Procédé suivant la revendication 8, dans lequel la puissance électrique d'alimentation fournie au bloc moteur est sensiblement constante durant la transition.

10. Système de traction (10) d'un véhicule électrique comprenant un bloc moteur (14) et un module d'alimentation (16) conforme à l'une quelconque des revendications 1 à 7.

11. Véhicule électrique comprenant un système de traction (10) conforme à la revendication 10.

## Patentansprüche

1. Modul (16) zur Versorgung eines Motorblocks (14) eines elektrischen Transportfahrzeugs mit elektrischer Leistung, welches aufweist einen ersten Versorgungsblock (20) des Motorblocks (14), welcher einen ersten Wandler (24) aufweist, welcher an eine erste Quelle (12) zur elektrischen Energieversorgung angeschlossen ist, welche dazu eingerichtet ist, den Motorblock (14) gemäß einem ersten elektrischen Versorgungsmodus zu versorgen, wobei der Wandler (24) eine erste elektrische Leistung bereitstellt,
und einen zweiten Versorgungsblock (30), welcher einen zweiten Wandler (40) aufweist, welcher an eine zweite Quelle (32) zur elektrischen Energieversorgung angeschlossen ist, welche dazu eingerichtet ist, den Motorblock (14) gemäß einem zweiten elektrischen Versorgungsmodus zu versorgen,
wobei der erste Wandler (24) und der zweite Wandler (40) parallel geschaltet sind, wobei der erste und der zweite Wandler eine gleiche Ausgangspannung haben,
wobei das Modul zur Versorgung ferner aufweist
ein Steuerungsmodul (50), welches dazu eingerichtet ist, einen Befehl zum Umschalten zwischen einem anfänglichen Versorgungsmodus, ausgewählt aus dem ersten Modus und dem zweiten Modus, und einem finalen Versorgungsmodus, welcher von dem anfänglichen Versorgungsmodus verschieden ist, zu empfangen,
wobei das Modul zur Versorgung **dadurch gekennzeichnet ist, dass** es dazu eingerichtet ist, den ersten Wandler so anzusteuern, dass die Ausgangsspannung progressiv verändert wird, um einen Übergang zwischen dem anfänglichen Versorgungsmodus und dem finalen Versorgungsmodus umzusetzen, und die erste Leistung, welche durch den ersten Wandler bereitgestellt wird, zu steuern, um eine elektrische Versorgungsleistung, welche an den Motorblock bereitgestellt wird, während des Übergangs auf ungleich Null zu halten, wobei die progressive Spannungsänderung in Abhängigkeit von im Voraus abgespeicherten Informationen, welche eine Beziehung zwischen einem Wert der zweiten Leistung, welche durch den zweiten Versorgungsblock (30) bereitgestellt wird, und einem Wert der Ausgangsspannung des zweiten Wandlers enthalten, angewendet wird.

2. Modul gemäß dem Anspruch 1, wobei der erste Versorgungsblock (20) aufweist einen Transformator (22), welcher mit einer Oberleitung (12) verbunden ist, und wobei der zweite Versorgungsblock(30) einen autonomen Motor (34), welcher mit einem Wechselstromgenerator (36) verbunden ist, aufweist.

3. Modul gemäß dem Anspruch 1 oder 2, wobei, wenn der anfängliche Versorgungsmodus der erste Versorgungsmodus ist und der finale Versorgungsmodus der zweite Versorgungsmodus ist, das Steuerungsmodul (50) dazu eingerichtet ist, die Ausgangsspannung progressiv zwischen einem Maximalwert der Spannung und einem Minimalwert abzusenken, und, wenn der anfängliche Versorgungsmodus der zweite Versorgungsmodus ist und der finale Versorgungsmodus der erste Versorgungsmodus ist, das Steuerungsmodul (50) dazu eingerichtet ist, die Ausgangsspannung progressiv zwischen einem Minimalwert und einem Maximalwert der Spannung zu erhöhen.

4. Modul gemäß einem der Ansprüche 1 bis 3, wobei die progressive Spannungsänderung eine lineare Änderung ist.

5. Modul gemäß einem der Ansprüche 1 bis 4, wobei das Steuerungsmodul (50) dazu eingerichtet ist, eine zweite Leistung, welche durch den zweiten Versorgungsblock (30) bereitgestellt wird, in Abhängigkeit von der Ausgangsspannung des ersten Wandlers (24) zu ermitteln und den ersten Wandler (24) so zu steuern, dass ein Leistungskomplement bezüglich der zweiten Leistung bereitgestellt wird, um eine elektrische Versorgungsleistung auf einem bestimmten Wert zu halten.

6. Modul gemäß einem der Ansprüche 1 bis 5, wobei der erste Wandler (24) ein aktiver Vierquadrantensteller mit Transistoren (24a, 24b, 24c, 24d) vom IGBT-Typ ist.

7. Modul gemäß einem der Ansprüche 1 bis 6, wobei die elektrische Versorgungsleistung, welche an den Motorblock bereitgestellt wird, während des Übergangs im Wesentlichen konstant ist.

8. Verfahren zur Versorgung mit elektrischer Leistung eines Motorblocks (14) eines elektrischen Transportfahrzeugs, welches in einem Modul zur Versorgung (16) eines Motorblocks (14) eines elektrischen Transportfahrzeugs mit elektrischer Leistung umgesetzt wird, welches aufweist einen ersten Versorgungsblock (20) des Motorblocks (14), welcher einen ersten Wandler (24) aufweist, welcher an eine erste Quelle (12) zur elektrischen Energieversorgung angeschlossen ist, welche dazu eingerichtet ist, den Motorblock (14) gemäß einem ersten elektrischen Versorgungsmodus zu versorgen, wobei der Wandler (24) eine erste elektrische Leistung bereitstellt,
und einen zweiten Versorgungsblock (30), welcher einen zweiten Wandler (40) aufweist, welcher an eine zweite Quelle (32) zur elektrischen Energieversorgung angeschlossen ist, welche dazu eingerichtet ist, den Motorblock (14) gemäß einem zweiten elektrischen Versorgungsmodus zu versorgen, wobei der erste Wandler (24) und der zweite Wandler (40) parallel geschaltet sind, wobei der erste und der zweite Wandler eine gleiche Ausgangspannung haben,
wobei das Verfahren **dadurch gekennzeichnet ist, dass** es durch ein Steuerungsmodul des Moduls zur Versorgung umgesetzt wird und Schritte aufweist, welche aufweisen:
- Empfangen eines Befehls zum Umschalten zwischen einem anfänglichen Versorgungsmodus, ausgewählt aus dem ersten Modus und dem zweiten Modus, und einem finalen Versorgungsmodus, welcher von dem anfänglichen Versorgungsmodus verschieden ist,
- Ansteuern des ersten Wandlers derart, dass die Ausgangsspannung progressiv verändert wird, um einen Übergang zwischen dem anfänglichen Versorgungsmodus und dem finalen Versorgungsmodus umzusetzen, und Steuern der ersten Leistung, welche durch den ersten Wandler (24) bereitgestellt wird, dazu, um die elektrische Versorgungsleistung, welche an den Motorblock bereitgestellt wird, während des Übergangs auf ungleich Null zu halten, wobei die progressive Spannungsänderung in Abhängigkeit von im Voraus abgespeicherten Informationen, welche eine Beziehung zwischen einem Wert der zweiten Leistung, welche durch den zweiten Versorgungsblock (30) bereitgestellt wird, und einem Wert der Ausgangsspannung des zweiten Wandlers enthalten, angewendet wird.

9. Verfahren gemäß dem Anspruch 8, wobei die elektrische Versorgungsleistung welche an den Motorblock bereitgestellt wird, während des Übergangs im Wesentlichen konstant ist.

10. Antriebssystem (10) eines elektrischen Fahrzeugs, welches einen Motorblock (14) und ein Modul zur Versorgung (16) gemäß einem der Ansprüche 1 bis 7 aufweist.

11. Elektrisches Fahrzeug, welches ein Antriebssystem (10) gemäß dem Anspruch 10 aufweist.

## Claims

1. Module (16) for supplying electric power to a motor block (14) of an electric transport vehicle, comprising a first power supply unit (20) for supplying said motor block (14), comprising a first converter (24) connected to a first electric power supply source (12), adapted to supply said motor block (14) in accordance with a first electric power supply mode, said first converter providing a first electric power,
and a second power supply unit (30) comprising a second converter (40) connected to a second electric power supply source (32), adapted to supply said motor block (14) in accordance with a second electric power supply mode,
wherein the first converter (24) and the second converter (40) are connected in parallel, the first and second converters having the same output voltage,
the power supply module further comprising a control module (50) adapted to receive a command for switching between an initial power supply mode from among said first mode and said second mode and a final power supply mode that is different from the initial power supply mode,
the power supply module being **characterised in that** it is configured to command said first converter to progressively vary the output voltage in order to effect a transition between the initial power supply mode and the final power supply mode, and to control the first power supplied by said first converter in order to maintain an electric power supply provided to the motor block that is not zero during the transition, said progressive variation in voltage being applied as a function of previously stored information comprising an association between a second power value provided by the second power supply unit (30) and a voltage value at the output of the second converter.

2. Module according to claim 1, wherein the first power supply unit (20) comprises a transformer (22) connected to a catenary (12), and the second power supply unit (30) comprises an autonomous motor (34) connected to an alternator (36).

3. Module according to either claim 1 or claim 2, wherein, when the initial power supply mode is the first power supply mode and the final power supply mode is the second power supply mode, the control module (50) is adapted to progressively lower said output voltage between a maximum voltage value and a minimum value, and when the initial power supply mode is the second power supply mode and the final power supply mode is the first power supply mode, the control module (50) is adapted to progressively increase said voltage between a minimum value and a maximum voltage value.

4. Module according to any one of claims 1 to 3, wherein said progressive voltage variation is a linear variation.

5. Module according to any one of claims 1 to 4, wherein the control module (50) is adapted to determine a second power provided by the second power supply unit (30) as a function of said voltage at the output of the first converter (24) and to control said first converter (24) in order to provide additional power relative to said second power in order to maintain an electric power supply of a given value.

6. Module according to any one of claims 1 to 5, wherein said first converter (24) is an active four-quadrant converter comprising IGBT-type transistors (24a, 24b, 24c, 24d).

7. Module according to claims 1 to 6, wherein the electric power supply provided to the motor block is substantially constant during the transition.

8. Method for supplying electric power to a motor block of an electric transport vehicle, which method is carried out in a module (16) for supplying electric power to a motor block (14) of an electric transport vehicle, comprising a first power supply unit (20) for supplying said motor block (14), comprising a first converter (24) connected to a first electric power supply source (12), adapted to supply said motor block (14) in accordance with a first electric power supply mode, said first converter providing a first electric power,
and a second power supply unit (30) comprising a second converter (40) connected to a second electric power supply source (32), adapted to supply said motor block (14) in accordance with a second electric power supply mode, wherein the first converter (24) and the second converter (40) are connected in parallel, the first and second converters having the same output voltage,
the method being **characterised in that** it is carried out by a control module of said power supply module and comprises steps consisting in:
- receiving a command for switching between an initial power supply mode from among said first mode and said second mode, and a final power supply mode that is different from the initial power supply mode,
- commanding said first converter to progressively vary said output voltage in order to effect a transition between the initial power supply mode and the final power supply mode, and controlling the first power provided by said first converter (24) in order to maintain the electric power supply provided to the motor block being not zero during the transition, said progressive variation in voltage being applied as a function of previously stored information comprising an association between a second power value provided by the second power supply unit (30) and a voltage value at the output of the second converter.

9. Method according to claim 8, wherein the electric power supply provided to the motor block is substantially constant during the transition.

10. Traction system (10) of an electric vehicle comprising a motor block (14) and a power supply module (16) according to any one of claims 1 to 7.

11. Electric vehicle comprising a traction system (10) according to claim 10.
